# EUROPEAN PATENT APPLICATION

(11) **EP 4 708 293 A1**
(43) Date of publication of application: **11.03.2026**
(21) Application number: 24382964.5
(22) Date of filing: 09.09.2024
(51) Int. Cl.: G11B 27/031, G11B 27/28, G10L 13/00, G10L 15/00

(54) **METHOD OF PROVIDING AN ADAPTED FILE FOR AN AUDIOVISUAL PROGRAMME**

(71) Applicant: García Crespo, Ángel, 28045 Madrid (ES); Matheus Chacín, Carlos Alberto, 28907 Getafe (ES); Fuenmayor González, Francisco Javier, 28911 Leganés (ES); Unuware, S.L., 28919 Leganés (ES)
(72) Inventor: GARCÍA CRESPO, Ángel, 28045 Madrid (ES); MATHEUS CHACÍN, Carlos Alberto, 28907 Getafe (ES); FUENMAYOR GONZÁLEZ, Francisco Javier, 28911 Leganés (ES)
(74) Representative: TRBL Intellectual Property

(57) **Abstract**

This invention describes a method for processing and summarizing audiovisual programs, transforming audio and video content into accessible and easy-to-understand summaries using artificial intelligence technologies, including transcription, text adaptation, text-to-speech conversion, and presentation through an animated avatar.

## Description

### TECHNICAL FIELD

This invention belongs to the field of telecommunications, and more particularly, to the accessibility services provided by the same.

### STATE OF THE ART

Audiovisual programmes have been a source of entertainment for many people around the world. The shape and style of these programmes is completely different depending on the source where they are obtained. In some cases, the focus is intentionally biased towards a particular point of view, and this is preferred by the user.

However, despite the style or shape of a particular audiovisual programme may be preferred, it is possible that the user is not completely able to follow the content of the same. Due to the lack of time or because of being in a different language or even because the user may have a cognitive disability, the content of the news bulleting may need, in some cases, to be adapted.

Automatic translations are an aid that aims to break the language barriers, but the present invention presents a global solution for this problem.

### DESCRIPTION OF THE INVENTION

The invention provides an alternative solution for the aforementioned problem by means of a method according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method of providing an adapted file for an original audiovisual programme, the method comprising the following steps
a. obtaining an original file of the original audiovisual programme, wherein the original file comprises an audio part and a video part;
b. processing the audio part to obtain a metadata file which comprises text information relative to the audio part and time information, wherein the text information contains a plurality of text elements and the time information contains a time reference for each text element, in such a way that the text elements are ordered according to the time information of each one;
c. sending a request to a machine learning algorithm which uses natural language processing, such as large language model, the request containing instructions to divide the text information into individual fragments by indicating an index reference of an initial text element and an index element of a final text element for each individual fragment;
d. the machine learning algorithm provides the index reference of the initial text element and the index reference of the final text element for each individual fragment;
e. defining the individual fragments, wherein each individual fragment contains the text elements from the corresponding initial text element until the corresponding final text element;
f. processing each individual fragment by applying an intermediate adaptation of each text element, to obtain one adapted individual fragment for each individual fragment;
g. processing each adapted individual fragment by applying text-to-speech techniques to obtain one adapted audio file for each adapted individual fragment;
h. creating a plurality of information blocks, where each information block contains a video element and a speech element, wherein the video element is obtained from the video part of the original file and the speech element is obtained from the adapted audio file; and
i. creating a final file with at least some of the information blocks.

Step a. involves the obtention of an original file of an original audiovisual programme. This may be obtained as a unique file or as the combination of an audio part and a video part. This audiovisual programme can therefore be a piece directly obtained from a TV channel or by any other means (a podcast, a stream, a clip from a webpage, etc). Examples of audiovisual programmes are a news bulletin, a sports programme, an interview program, etc.

Step b. involves the processing of the audio part of the original file. The aim of this process is to obtain a metadata file, with text information and time information associated to the text information. For example, the text information may be a transcription of the words contained in the audio file. This may be obtained by any speech to text algorithm, which may use a machine learning model. This transcription, which is an example of text information, contains a plurality of text elements. These text elements may be words or may be just lines of the text. The time information contains a time for each of the text elements of the text information. Therefore, the metadata file contains both the text information (e.g., the words or the lines) and time information associated to this text information (e.g., a time for each word or for each line).

Step c. involves the delivery of a request to a machine learning algorithm, such as a large language model (LLM). This machine learning algorithm uses natural language processing and is configured to identify which is the initial text element and the final text element of different fragments which can be identified in the text information. The request contains instructions (e.g. a prompt) requesting to divide the text information into individual fragments by indicating an index reference of an initial text element and an index reference of a final text element for each individual fragment. This index reference is related to the time reference; in some particular embodiments, the index reference corresponds to the time reference as such, but in other embodiments it corresponds to an ordered index, which provides a subsequent ordered number for each text element ([1] for the first text element, [2] for the second text element, and so on).

Step d. defines the response of the machine learning algorithm to the request defined by step c. In this step, the machine learning algorithm responds with a list of index references, each index reference corresponding to an initial text element. In particular, the machine learning algorithm provides the index reference of an initial text element and the index reference of a final text element for each fragment. Since each index reference corresponds to a time reference and the metadata file contains the correspondence between each text element and their correspondent time reference, with the index references provided by the machine learning algorithm, each initial text element and each final text element may be identified for each fragment.

Step e. involves the identification of each initial text element (due to the aforementioned correspondence contained in the metadata file) and the definition of each individual fragment. Since the text elements are ordered according to their time references, the text elements form an ordered list. Each individual fragment starts in its corresponding initial text element and ends in its corresponding final text element. With this method, the duration of each individual fragment (which provides information about the duration of each news in the original file) is also provided.

Step f. involves the processing of each individual fragment to obtain one adapted individual fragment for each individual fragment. Once that the text and the time have been obtained, the text may be transformed so that it is more understandable by people that may have difficulties in understanding the original version.

Step g. involves the process of each adapted individual fragment by applying text to speech techniques to obtain one adapted audio file for each summarized individual fragment. This means the conversion of the adapted text to speech. In some embodiments, the speech is just an audio file. In other embodiments, a direct avatar with animated video and audio is created, so the speech is deemed to be the audio of the animated avatar.

Step h. involves the creation of a plurality of information blocks. Each information block contains a video element and a speech element: the video element is obtained from the video part of the original file and the speech element is obtained from the adapted audio file. Instead of a single audio file, an animated avatar containing this audio file may be created, as mentioned above. Finally, step i. involves the creation of a final file with the information blocks.

This method is suitable for creating a customized adapted file based on an original audiovisual programme. The features of dividing the transcription into segments and then using these segments to quickly find the initial element of each fragment provides the advantage of a better outcome: each block is treated (and adapted) as an independent item, so the interaction between the corresponding section in the original programme and the corresponding adapted section can be done independently.

The input of this method is a standard audiovisual programme, which can be obtained from any TV channel, since the format and appearance are not relevant for the present invention. Starting from any format, the method, by following the steps in order, arrives at an adapted file, such as an easy-reading adaptation or a translated version or any file which is especially adapted for those people who may have any problem in dealing with the original format.

In some particular embodiments, step a. is carried out by
receiving a clip file and extracting the video part and the audio part; or
receiving the video part and the audio part as independent elements.

The method is compatible with receiving a global file with the audio and video and also with receiving those elements separately. In some cases, the TV channel may provide the global file in one format or in the other.

In some particular embodiments, step b. comprises a transformation of the audio part to a format which is suitable for the processing, such as WAV or MP3.

A format which is suitable for being processed is a format which is supported by any processing platform. Despite WAV or MP3 are the most popular formats, there are many others which may also be suitable for this purpose.

In some particular embodiments, the text elements are words. In other particular embodiments, the text elements are word lines.

The method is compatible with different classifications of the text elements. The text elements represent any element which the text may be divided into. The text may be divided into words or may be divided into lines. Any of these two options may have advantages and disadvantages in terms of speech, reliability and computing time. They also have effects on the further steps of the method.

In some particular embodiments, the lines are calculated by identifying a punctuation mark, a silence or a change of speaker.

Lines may be a more effective way of dividing the text information into text elements. These lines may be obtained by taking into account natural pauses that could be present in the original audio file. These pauses may be, for example, silences or punctuation marks. Also, a change in the voice of the speaker can be clearly identified as a change of line.

In fact, in some particular embodiments, a change in the speaker may be included as a feature in the metadata file, and can be used later on to create more than one avatar so that each avatar corresponds to one of the voices of the original audio file.

In some particular embodiments, the information block further comprises a locution element which comprises a clip of an animated character which is represented as speaking the content of the speech element, by using facial animation techniques and lip synchronization techniques.

The audio of the locution element can be obtained before or after obtaining the clip, or even at the same time: the invention only requires a speech element, but the speech element may be part of an audiovisual locution element (the speech element would be the audio portion of this locution element and, in addition, an animated character is provided). In some cases the audio is obtained from an independent source, and then the animated clip is created, or in other cases, the animated clip and the speech element are obtained as a single item.

In fact, in some particular embodiments, the metadata file also comprises a person attribute, to identify to which person belongs each text element, and step h. comprises the creation of different speech elements for each person. These different speeches may be accompanied by different animated avatars, when they are present.

This additional character is helpful for those people who may appreciate a physical appearance in a character which replaces the original speaker.

In some particular embodiments, the animated character is created by a generative artificial intelligence, such as a neural network for generating images or videos.

In some particular embodiments, the adapted individual fragment is obtained as a translation of the corresponding individual fragment.

A translation is a different option for the present invention. The text can be adapted for a person with problems for understanding the original format but may also be a translation into a different language, to extend the coverage of the news bulletin. This is an alternative option to the traditional language subtitles

In some particular embodiments, the adapted individual fragment is obtained as a summary of the corresponding individual fragment, using automatic summarizing techniques.

Since the individual fragment is provided in a text format, any transformation, such as the translation or a summary or adaptation, are possible. In some particular embodiments, the summary is an easy-reading summary.

In some particular embodiments, step h. comprises measuring the time which lasts each speech element and comparing the measured time with the time of each individual fragment, wherein
the video element is a cut portion of the original video if the corresponding portion of the original video portion is longer than the measured time; and/or
the video element contains a loop play of a portion of the original video if the corresponding portion of the original video portion is shorter than the measured time

Sometimes, the original video has some useful information, such as videos or infographics. The present method may make use of this useful information by overlapping the original video material with the adapted audio material. Since the method provides time information about the location of each fragment, different portions of the original video may be obtained. However, the duration of the corresponding portion of the original video may not be the same as the duration of the corresponding speech element. Since the speech element is the main item, the portion of the original video is adapted. If the speech element is longer than the original portion of the original video, the corresponding portion of the original video is cut, so that the resulting cut portion lasts the same as the speech element. On the contrary, if the speech element is shorter than the original portion of the original video, the corresponding portion of the original video is looped, so that the resulting looped portion lasts the same as the speech element.

In some particular embodiments, the final file does not contain all the information blocks and the order of the information blocks in the final file is defined by obtaining information from an external network. This can be done by using big data and algorithms measuring social impact.

The method of the present invention allows the reallocation of the information blocks, or even the deletion of some of them which are deemed to be less interesting.

In some particular embodiments, the method further comprises a step of customizing the final file according to user preferences which may affect to the order or the duration of the information blocks.

The method of the present invention allows the duration of the blocks to be defined. This affect to the duration of the adapted individual fragments and to the duration of the video portion that will be used in the information blocks. As these two entities may be constrained to a defined time duration, the method of the invention provides a flexibility that may adapt to different situations.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows some steps of a method according to the invention. In this figure, an original file of a news bulletin is obtained and processed to obtain a metadata file.
Figure 2 shows further steps of a method according to the invention. In this figure, the metadata file is divided into four individual fragments.
Figure 3 shows further steps of a method according to the invention. In this figure, each fragment is converted into an adapted audio file.
Figure 4 shows further steps of a method according to the invention. In this figure, information blocks are assembled into the final file.

In these figures, the following reference numbers have been used:
- 1: Original file
- 2: Audio part
- 3: Video part
- 4: Metadata file
- 5: Words
- 6: Time reference
- 7: Individual fragment
- 8: AI algorithm
- 9: Adapted individual fragment
- 10: Adapted audio file
- 11: Information block
- 12: Video element
- 13: Speech element
- 14: Animation feature
- 15: Final file

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

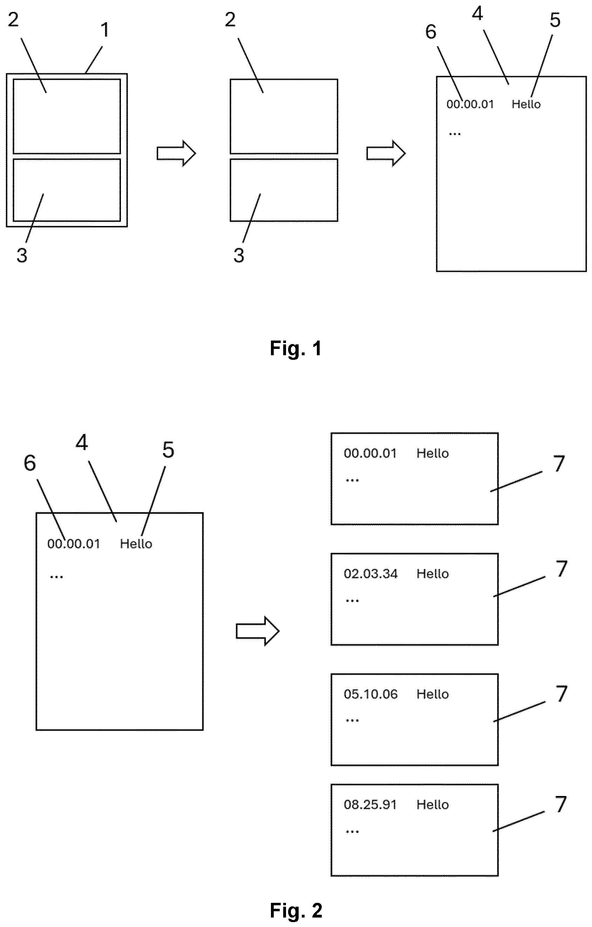

Figure 1 shows some steps of a method according to the invention.

In this figure, an original file 1 of a news bulletin is obtained. This news bulletin can be a piece directly obtained from a TV channel or by any other means (a podcast, a stream, a clip from a webpage, etc). This original file 1 is obtained in an AVI (Audio Video Interleaved) movie format, where the video part and the audio part are integrated in a single file. This is a very common way of providing the original file of a news bulletin. However, a first step of the method includes obtaining the audio part 2 and the video 3 part separately, so if the news bulletin provider is able to supply the audio and video files separately, this is algo advantageous for the method of the invention, since this preliminary step would be solved.

The audio part 2 is then processed to obtain a metadata file 4. The purpose of this action is to obtain a more detailed file concerning the audio information. The audio part 2 comprises the speech of the news presenter. By this processing step, an artificial intelligence (Al)-based speech-to-text algorithm is used to generate the transcription of the text (i.e., obtaining a plurality of words 5) together with an associated time information 6. In this case, the time information 6 is associated to each word 5, but in other cases, each time information may be associated to a text line or phrase. The metadata file 4 is generated with the words 5 of the transcription and the time references 6 associated to these words 5.

In other cases, lines can be used instead of words. These lines may be grouped using a specific rule, such as finding a silence or a punctuation mark. In other occasions, lines may be separated when a change of speaker is found. In these cases, the metadata file may comprise a person attribute to register these different speakers.

Figure 2 shows further steps of a method according to the invention.

In this figure, a request is sent to an AI Large Language Model (LLM) algorithm. The request (or prompt) made to this AI LLM algorithm contains instructions to divide the text information of the transcription into a plurality of individual fragments by returning the time reference of the initial text element for each individual fragment.

In the example shown in this figure, the metadata file 4 contains a plurality of words 5, each word having a time information 6. The prompt made to the AI LLM algorithm contains instructions to return the time information of the first element of each individual fragment. Hence, if the transcription can be divided into four individual fragments 7 (i.e., four different news), each one starting with the word "hello", this algorithm will return time references 00.00.01, 02.03.34, 05.10.06 and 08.25.91 as the time references of the first words of each individual fragment.

If each text element is identified by a subsequent index reference, the AI LLM will return the index references of each text element. However, since there is an univocal correspondence between the index references and the text elements, these text elements can be immediately identified.

With these data, the system will define the individual fragments. In this case, there will be four individual fragments: the first fragment will comprise the words from the first "hello" to the word which is immediately before the next "hello" (which will be the first word of the second individual fragment).

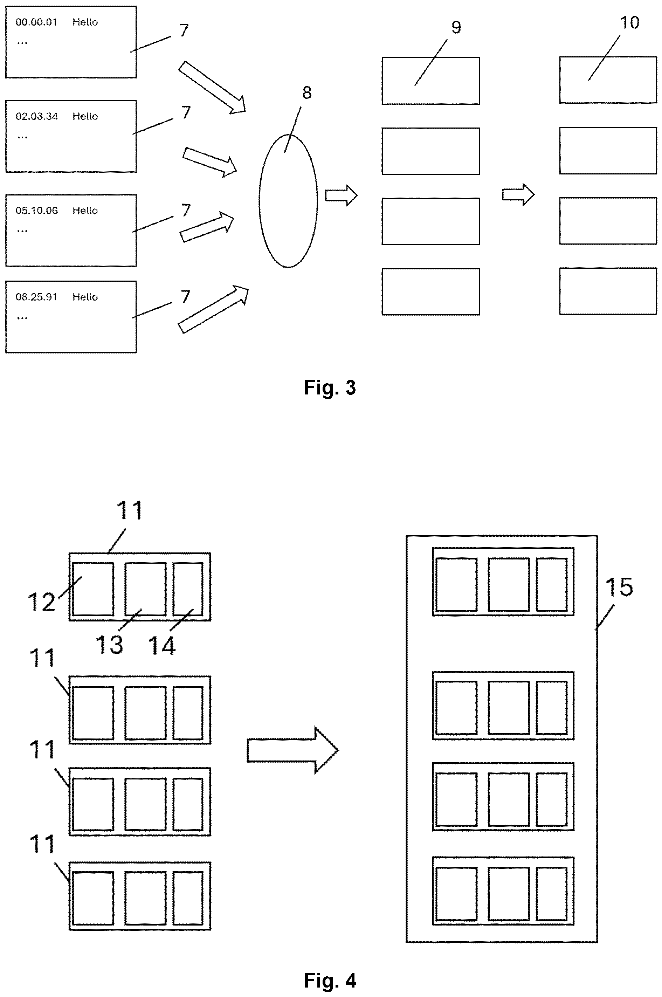

Figure 3 shows further steps of a method according to the invention.

Once that each individual fragment has been identified and separated, each individual fragment 7 is sent to a different machine learning algorithm 8 for an adaptation. This adaptation may comprise a translation, a summary, an easy-reading summary or any other adaptation which improves understandability of the adapted fragment.

In this case, each individual fragment 7 is sent to an AI algorithm 8 which provides an adapted individual fragment 9, which is a summary of the corresponding news in an easy-reading model, eliminating complex text and improving clarity. Then, the resulting simplified text, which is the adapted individual fragment 9, is converted to audio format. This is done by applying text-to-speech techniques to obtain one adapted audio file 10 for each summarized individual fragment 9. The prompt for this conversion may include temporary limitations, as well as the style or any other requirement. The aim of this step is obtaining a synthetic and natural narration of the adapted individual fragment obtained in the previous step. The result of this step is a plurality of adapted audio files 10 in audio format, once per each adapted individual fragment 9, which was in text format. In those cases where different speakers were identified in the metadata file, different voices for the fragments associated to each speaker may be used.

Figure 4 shows further steps of a method according to the invention.

Once that the adapted audio files have been obtained, the step illustrated by this figure includes the creation of a plurality of information blocks 11. Each information block 11 contains a video element 12 and a speech element 13: the video element 12 is obtained from the video part of the original file and the speech element is obtained from the adapted audio file 10.

Further, each information block may contain, as in the case of the present example, an animation feature 14 of an avatar which is represented as speaking the content of the speech element 13, by using facial animation techniques and lip synchronization techniques. The position, shape and appearance of the avatar may be customized by the user. In some particular embodiments, the information block further comprises a locution element which comprises a clip of an animated character which is represented as speaking the content of the speech element, by using facial animation techniques and lip synchronization techniques. The speed of the speech may be fitted to the duration of the corresponding video element 12. On the contrary, the duration of the video element 12 (by pausing, repeating or cutting its content) may be fitted to the duration of the speech element 13. All of these options may be customized by the user depending on their needs (short of time or need a clear and slow explanation). Since the time of each new is provided by the time of each individual fragment 7, the processor already has this information. In all of these cases, when different speakers are identified, different avatars may be used.

All of the technical steps are carried out by a processor. As used herein, the term "processor" refers to one or more processing devices, apparatus, programs, circuits, components, systems, subsystems, or any combination thereof, whether implemented in hardware, software, and/or firmware, and whether or not it is programmable. In particular embodiments of the invention, the processor at least includes a microprocessor, a computer, or a combination thereof.

A final step involves the creation of a final file 15 with the information blocks 11. The information blocks 11 may be in the same order as the original file or in a different one. To define the order of the information blocks 11, the processor may use big data and algorithms measuring social impact. Thus, information blocks may be reallocated, or even the deleted if they are deemed to be less interesting.

The final file may also be customized according to user preferences which may affect to the order or the duration of the information blocks.

## Claims

1. A method of providing an adapted file for an original audiovisual programme, the method comprising the following steps
a. obtaining an original file (1) of the original audiovisual programme, wherein the original file (1) comprises an audio part (2) and a video part (3);
b. processing the audio part (2) to obtain a metadata file (4) which comprises text information relative to the audio part and time information, wherein the text information contains a plurality of text elements (5) and the time information contains a time reference (6) for each text element, in such a way that the text elements (5) are ordered according to the time information of each one;
c. sending a request to a machine learning algorithm which uses natural language processing, such as large language model, the request containing instructions to divide the text information into individual fragments (7) by indicating an index reference of an initial text element and an index element of a final text element for each individual fragment;
d. the machine learning algorithm provides the index reference of the initial text element and the index reference of the final text element for each individual fragment;
e. defining the individual fragments (7), wherein each individual fragment (7) contains the text elements from the corresponding initial text element until the corresponding final text element;
f. processing each individual fragment by applying an intermediate adaptation of each text element, to obtain one adapted individual fragment (9) for each individual fragment (7);
g. processing each adapted individual fragment (9) by applying text-to-speech techniques to obtain one adapted audio file (10) for each adapted individual fragment (8);
h. creating a plurality of information blocks (11), where each information block (11) contains a video element (12) and a speech element (13), wherein the video element (12) is obtained from the video part (3) of the original file (1) and the speech element (13) is obtained from the adapted audio file (10); and
i. creating a final file (15) with at least some of the information blocks (11).

2. Method according to claim 1, wherein the metadata file (4) also comprises a person attribute, to identify to which person belongs each text element, and step h. comprises the creation of different speech elements for each person.

3. Method according to any of the preceding claims, wherein the index reference corresponds to the time reference (6).

4. Method according to any of claims 1 or 2, wherein the index reference is assigned as a subsequent number for each text element (5).

5. Method according to any of the preceding claims, wherein the text elements (5) are words.

6. Method according to any of claims 1 to 4, wherein the text elements are word lines.

7. Method according to claim 6, wherein the lines are generated by identifying a punctuation mark, a silence or a change of speaker.

8. Method according to any of the preceding claims, wherein the information block (11) further comprises a locution element which comprises a clip (14) of an animated character which is represented as speaking the content of the speech element, by using facial animation techniques and lip synchronization techniques.

9. Method according to claim 8, wherein the animated character is created by a generative artificial intelligence, such as a neural network for generating images or videos.

10. Method according to any of the preceding claims, wherein the adapted individual fragment (9) is obtained as a translation of the corresponding individual fragment (7).

11. Method according to any of claims 1 to 9, wherein the adapted individual fragment (9) is obtained as a summary of the corresponding individual fragment (7), using automatic summarizing techniques.

12. Method according to claim 11, wherein the summary is an easy-reading summary.

13. Method according to any of the preceding claims, wherein step h. comprises measuring the time which lasts each speech element (13) and comparing the measured time with the time of each individual fragment (7), wherein
the video element (12) is a cut portion of the original video if the corresponding portion of the original video portion is longer than the measured time; and/or
the video element (12) contains a loop play of a portion of the original video if the corresponding portion of the original video portion is shorter than the measured time.

14. Method according to any of the preceding claims, wherein the final file (15) does not contain all the information blocks and the order of the information blocks in the final file (15) is defined by obtaining information from an external network.

15. Method according to any of the preceding claims, further comprising a step of customizing the final file (15) according to user preferences which may affect to the order or the duration of the information blocks (11).
